# EUROPÄISCHE PATENTSCHRIFT

(11) **EP 1 184 793 B1**
(45) Veröffentlichungstag und Bekanntmachung des Hinweises auf die Patenterteilung: **26.06.2002**
(21) Anmeldenummer: 00117654.4
(22) Anmeldetag: 16.08.2000
(51) Int. Cl.: G06F 17/30, H04N 7/24

(54) **Verfahren und Vorrichtung zur Erstellung zeitlicher Aktivierbarkeitskriterien für Elemente einer Videosequenz**
Method and Apparatus for determining time-dependent activation criteria for video sequence elements
Méthode et appareil pour déterminer des critères temporels d'activation pour des éléments d'une séquence vidéo

(43) Veröffentlichungstag der Anmeldung: 06.03.2002
(73) Patentinhaber: active-film.com AG, 60487 Frankfurt am Main (DE)
(72) Erfinder: Hampl, Tilman, 97297 Waldhüttelbrunn (DE); Piegsda, Winfried, 76344 Eggenstein-Leopoldshafen (DE); Sonntag, Ralph, Dr., 36093 Künzell (DE)
(74) Vertreter: Grünecker, Kinkeldey, Stockmair & Schwanhäusser Anwaltssozietät

(56) Entgegenhaltungen:
- EP-A- 0 596 823
- WO-A-99/52045
- US-A- 5 428 774
- US-A- 5 969 715

## Beschreibung

Die Erfindung betrifft ein Verfahren und eine Vorrichtung zur rechnergestützten Verwaltung von Interaktivität von Elementen einer Videosequenz gemäß dem Oberbegriff des Anspruchs 1.

Durch das wirtschaftliche Interesse von Marketing und Vertrieb einen Kunden auf einfache und attraktive Weise an Produkte oder Informationen heran zu führen, die steigende Verbreitung verschiedenster Wiedergabeplattformen für Videosequenzen und auch die Möglichkeiten über das Internet Videosequenzen zu beziehen, wird Interaktivität in Videosequenzen zu einem wichtigen Faktor für die Bearbeitung von Videosequenzen.

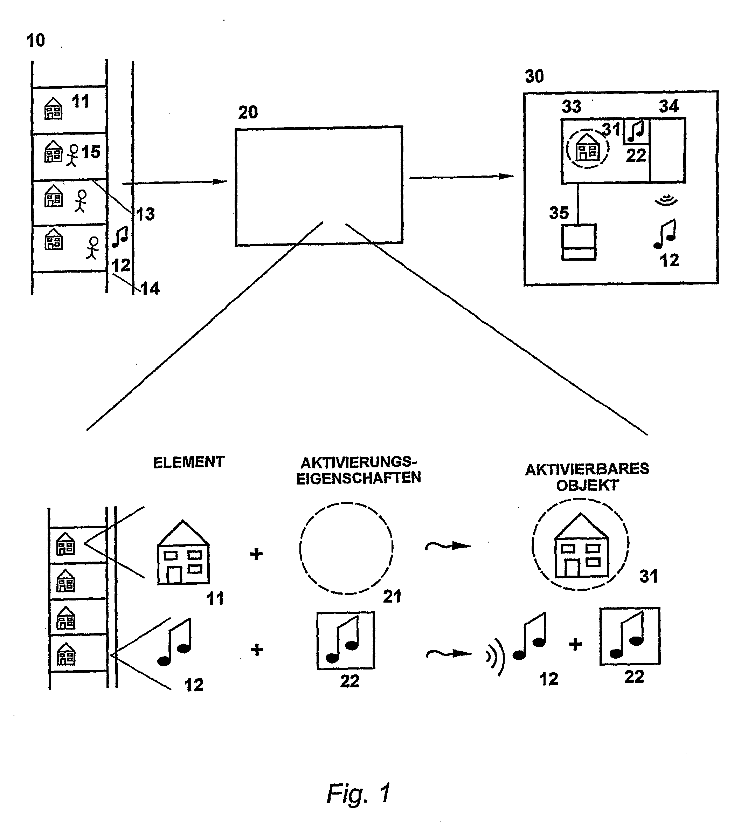

Figur 1 zeigt ein grundlegendes Schema einer Erstellung von Interaktivität für ein Element 11, 12 oder 15 einer Videosequenz 10. Die Videosequenz 10 umfasst, hier beispielhaft gezeigt, eine Bildsequenz 13 und eine Tonspur 14. In einer Einrichtung 20 zur Erstellung der Interaktivität werden für die Elemente 11 und 12 Aktivierungseigenschaften 21 und 22 festgelegt und aktivierbare Objekte 31 und (12+22) erstellt. Die aktivierbaren Objekte 31, (12+22) werden in die Videosequenz 10 eingebunden, um in einer Wiedergabeplattform 30 Interaktivität bereit zu stellen. In der Wiedergabeplattform 30 wird die Bildsequenz 13 in einer Bildschirmeinheit 33 mit dem aktivierbaren Objekt 31 und der aktivierbaren Fläche 22 dargestellt, während die Tonspur 14 durch eine Tonwiedergabeeinheit 34 als Tonfolge 12 wiedergegeben wird. Ein Betrachter (nicht dargestellt) hat durch Aktionen mit einer Zeigereinheit 35 die Möglichkeit, die aktivierbaren Objekte 31 oder (12+22) zu aktivieren. Die Aktivierungseigenschaften 21, 22 können verschiedene Ereignisse für unterschiedliche Aktionen des Betrachters enthalten. Zeigt der Betrachter mittels der Zelgereinheit 35 auf das aktivierbare Objekt 31 kann ein informativer Text zu dem Element 11 angezeigt werden. Drückt der Betrachter beim Zeigen eine Taste auf der Zeigereinheit 35, so kann eine kurze Videosequenz (nicht dargestellt) mit weiteren aktivierbaren Objekten dargestellt werden, nach dessen Ende mit der Videosequenz 10 fortgefahren werden kann.

Die Elemente einer Videosequenz können, wie in Figur 1, visuell (Haus 11) oder auditiv (Tonfolge 12), aber auch inhaltsbezogen (Freude oder Freundschaft) sein. Die üblichen Verfahren zur Erstellung von Interaktivität für Elemente einer Videosequenz sind auf visuelle Elemente ausgerichtet.

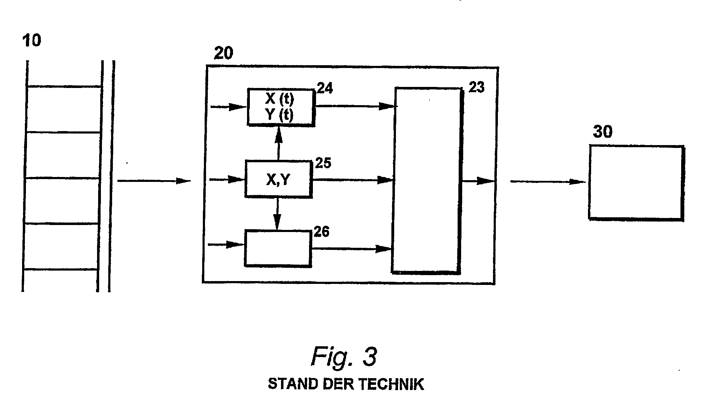

In Figur 3 ist ein Verfahren zur Verwaltung von Interaktivität von Elementen einer Videosequenz gemäß dem Stand der Technik dargestellt. In der Erstellungseinrichtung 20 wird für ein Element der Videosequenz 10, das aktivierbar sein soll, die räumliche Anordnung des Elements in einer Einheit 25 zur Koordinatenerfassung bestimmt und die räumliche Anordnung des Elements in seiner zeitlichen Entwicklung in einer Einheit 24 zur Bewegungserfassung verfolgt. In einer Einheit 26 zur Bestimmung der Aktivierungseigenschaften werden Aktivierungseigenschaften für das Element festgelegt. Zusammen mit den räumlichen Informationen aus den Einheiten 24 und 26 werden die Aktivierungseigenschaften in einer Einbindungseinheit 23 in die Videosequenz 10 eingearbeitet. Abhängig von Erfordernissen für eine Wiedergabeplattform 30 wird die Videosequenz 10 mit dem eingebundenen aktivierbaren Objekt 31 oder getrennt von ihm an die Wiedergabeplattform 30 weitergegeben.

Um die Bewegung eines Elements zu erfassen, sind im Stand der Technik verschiedene Methoden bekannt, die alle mit größeren Nachteilen verbunden sind. Bei einer manuellen Bearbeitung können dem Element seine Aktivierungseigenschaften Bild für Bild zugewiesen werden. Diese manuelle Bearbeitung bedingt einen extrem großen Aufwand mit vielen Fehlermöglichkeiten. Bei einer halbautomatischen Bearbeitung wird das aktivierbare Objekt nur in einer Auswahl von Hauptbildern der Videosequenz erzeugt. Dann kann die Bewegung des Elements zwischen den Hauptbildern automatisch berechnet werden, solange es sich auf mathematisch einfach definierbaren Kurven bewegt Bei erhöhtem Rechenaufwand verringert sich damit die notwendige manuelle Bearbeitung. Ausgehend von einer Grundform des Elements kann eine Mustererkennung das Element Bild für Bild automatisch erfassen und somit die Bewegung des Elements in der Videosequenz verfolgen. Die Mustererkennung wird insbesondere dadurch erschwert, dass das Element im Laufe der Videosequenz in seiner Darstellung veränderlich ist. Selbst für einfache Videosequenzen ergibt sich somit ein hoher Rechenaufwand. Eine Mustererkennung beispielsweise für eine bestimmte Person, für die sich der gezeigte Ausschnitt, die Perspektive oder die Haltung verändert, wäre extrem aufwendig.

Ein weiteres Problem entsteht, wenn ein Element, das aktiviert werden soll, zu kurz in der Videosequenz zu sehen ist oder die Bewegung des Elements zu schnell ist, um von einem Betrachter erkannt und aktiviert zu werden. Abhängig von dem Betrachter und der Wiedergabeplattform kann eine maximal sinnvolle Geschwindigkeit oder ein minimal sinnvoller Aktivierbarkeitszeitraum für ein aktivierbares Objekt sehr unterschiedlich sein. Wiedergabeplattformen können sich beispielsweise unterscheiden durch Bildschirmgröße, Bildauflösung, Wiedergabegeschwindigkeit, Aktivierungsmöglichkeit, Betriebssystem, Computerprogramm zur Wiedergabe der Videosequenz oder verschiedene Softwarestände des Computerprogramms.

Aufgrund der möglichen Unterschiede zwischen Wiedergabeplattformen muss eine Videosequenz an das spezielle Format für die Wiedergabeplattform angepasst sein. Eine vorhandene Videosequenz mit aktivierbaren Objekten kann nur begrenzt für verschiedene Wiedergabeplattformen konvertiert werden. Dagegen bedingt eine formatspezifische Erstellung von Versionen der Videosequenz für verschiedene Wiedergabeplattformen bei einem Verfahren gemäß dem Stand der Technik (Figur 3) meist die Wiederholung der arbeitintensiven Schritte im Verfahren.

WO 99/52045 A1 betrifft ein Editier- und Liefersystem, welches ein Videosignal und zugehörige interaktive Elemente synchronisiert zueinander zu einer Darstellungseinheit überträgt. Für ein Element der Videospur, das aktivierbar sein soll, wird ein interaktives Element durch Anordnung entlang der Zeitachse einer interaktiven Spur dem Element der Videospur zugeordnet. Dadurch wird ein Aktivierbarkeitszeitraum für das interaktive Element festgelegt.

EP-A-0 596 823 beschreibt ein System, in welchem ein Datensatz einem animierten Element in einer Multimediapräsentation zugeordnet wird, um dessen Aktivierbarkeit für einen Betrachter der Multimediapräsentation zu erreichen.

US 5,969,715 beschreibt ein System, welches Interaktivität beispielsweise für ein Videosignal bereitstellt. Darin werden Objekte beschrieben, die in dem System zeitlich gesteuerte Ereignisse auslösen können.

Es ist die Aufgabe der vorliegenden Erfindung ein Verfahren zum rechnergestützten Erstellen von Daten zur Erzeugung aktivierbarer Objekte für auditive oder visuelle Elementen einer Videosequenz bereitzustellen, das ein effizientere Erstellung der Daten insbesondere für bewegte Elemente und für unterschiedliche Wiedergabeplattformen gestattet.

Diese Aufgabe wird durch ein Verfahren gemäß Anspruch 1 gelöst. Die Unteransprüche beschreiben bevorzugte Ausführungsformen der Erfindung.

Gemäß der Erfindung wird einem Element einer Videosequenz, das potentiell aktivierbar sein soll, ein Identifikationsmerkmal zugeordnet, und bei einer Wiedergabe der Videosequenz werden, in Antwort auf eine Aktion eines Bearbeiters, Zeitmarken für das Identifikationsmerkmal als Aktivierbarkeitskriterium für das zugeordnete Element gesetzt. Die Vorteile dieses Verfahrens liegen in einer leichten Bedienbarkeit, der leichten Skalierbarkeit der Zeitmarken für unterschiedliche Wiedergabeplattformen und in der Analogie des Verfahrens mit dem späteren Aktivieren des aktivierbaren Objekts durch einen Betrachter. Der Bearbeiter muss, genau wie der Betrachter, das Element erkennen und entsprechend eine Aktion ausführen. Die Zeitmarken werden so der Situation des Betrachters besser angepasst sein.

Gemäß einer bevorzugten Ausgestaltung des Verfahrens erfolgt das Setzen der Zeitmarken in Antwort auf einen Tastendruck des Bearbeiters. Mit dem Tastendruck kann beim Drücken der Taste eine erste Zeitmarke gesetzt werden, um den Start eines Aktivierbarkeitszeitraums zu markieren, und eine zweite Zeitmarke beim Loslassen der Taste gesetzt werden, um das Ende des Aktivierbarkeitszeitraums zu markieren. Der Bearbeiter kann mehrere Tasten gleichzeitig drücken und somit mehrere Zeitmarken gleichzeitig setzen. Alternativ kann die Startzeitmarke durch ein kurzes Betätigen einer Taste und die Endzeitmarke durch kurzes Betätigen der gleichen oder einer anderen Taste erfolgen.

Besonders zweckmäßig ist es, dem Bearbeiter das potentiell aktivierbare Element bei dessen Auftreten durch einen Text oder eine Schaltfläche zu signalisieren, um eine schnellere Bearbeitung der Videosequenz zu ermöglichen, und den Bearbeiter bei einer wiederholten Wiedergabe der Videosequenz bereits aktivierte Elemente mit dem Text oder der Schaltfläche zu kennzeichnen.

Bei einer vorteilhaften Ausgestaltung des Verfahrens werden die Zeitmarken unabhängig von räumlicher Information über das Element verwaltet, wodurch die Notwendigkeit einer räumlichen Erfassung des Elements entfällt. Eine Unterscheidung zwischen auditiven oder visuellen Elementen der Videosequenz ist somit an dieser Stelle der Interaktivitätsverwaltung nicht erforderlich.

Gemäß einer bevorzugten Ausgestaltung des Verfahrens erfolgt die Wiedergabe der Videosequenz als Bewegtbild, somit ist die Bearbeitungsgeschwindigkeit sehr hoch. Insbesondere bekommt der Bearbeiter durch Darstellung in Echtzeit die identische Situation wie ein Betrachter der Videosequenz. Weiterhin kann der Bearbeiter durch Anpassung der Wiedergabegeschwindigkeit, insbesondere schneller oder langsamer als Echtzeit, die Bearbeitungsgeschwindigkeit der Videosequenz anpassen.

Besonders zweckmäßig ist es, die Zeitmarken und die Aktivierungseigenschaften für das Element getrennt von der Videosequenz und getrennt voneinander zu verwalten, wodurch die Erstellung von Videosequenzen für unterschiedliche Wiedergabeplattformen vereinfacht wird.

Bei einer zusätzlichen Verfahrensausgestaltung wird in der Videosequenz ein Verweis auf die getrennt verwalteten Zeitmarken oder Aktivierungseigenschaften des Elements abgelegt, womit eine Einbindung der aktivierbaren Objekte in die Videosequenz erleichtert wird.

Bei einer weiteren bevorzugten Ausgestaltung des Verfahrens wird eine Mindestlänge für Aktivierbarkeitszeiträume überwacht. Aktivierbarkeitszeiträume, die für eine Wahmehmung durch den Betrachter zu kurz sind, können somit durch halbautomatisches Verschieben der Zeitmarken verlängert werden. Gemäß einer bevorzugten Ausgestaltung des Verfahrens wird auch ein minimaler zeitlicher Abstand für Aktivierbarkeitszeiträume überwacht und durch ein Zusammenführen von Aktivierbarkeitszeiträume erreicht. Vermieden wird hierdurch, dass aktivierbare Objekte nur kurzzeitig nicht aktivierbar sind, und der Betrachter dies als Fehler in der Videosequenz interpretiert.

Gemäß einer besonders zweckmäßigen Verfahrensvariante wird ein aktivierbares Objekt für eine Wiedergabeplattform mit einem speziellen Format für dessen Videosequenzen, mittels der Zeitmarken und formatsspezifischen Aktivierungseigenschaften erstellt. Videosequenzen mit aktivierbaren Objekten werden für verschiedene Wiedergabeplattformen aus den gleichen Anfangsinformationen individuell angepasst erstellbar, wobei das Verfahren jederzeit wiederholbar ist, auch auf Anforderung erfolgen kann, und die optionale Einbindung räumlicher Informationen über das Element oder das aktivierbare Objekt über die Aktivierungseigenschaften ermöglicht.

Gemäss einer bevorzugten Ausgestaltung wird zur Realisierung eines der beschriebenen Verfahren eine rechnergesteuerte Vorrichtung verwendet, wodurch gute Bearbeitungszeiten und eine optimierte Ausgestaltung des Verfahren ermöglicht werden.

Bei einer zusätzlichen Ausgestaltung enthält ein Speichermedium ein Computerprogramm oder eine Befehlssequenz, welche eines der beschriebenen Verfahren realisiert. Durch diese Ausgestaltung wird ein einmal implementiertes Verfahren mehrfach verwendbar und transportabel.

Im Folgenden werden bevorzugte Ausführungsformen der Erfindung anhand der Zeichnungen beschrieben, welche im Einzelnen zeigen:
- Figur 1: ein grundlegendes Schema für die Erstellung von Interaktivität von Elementen einer Videosequenz,
- Figur 2: eine Darstellung eines erfindungsgemäßen Verfahrens für die Verwaltung von Interaktivität von Elementen einer Videosequenz in einer bevorzugten Ausführungsform und
- Figur 3: eine Darstellung eines Verfahrens zur Verwaltung von Interaktivität von Elementen einer Videosequenz gemäß dem Stand der Technik.

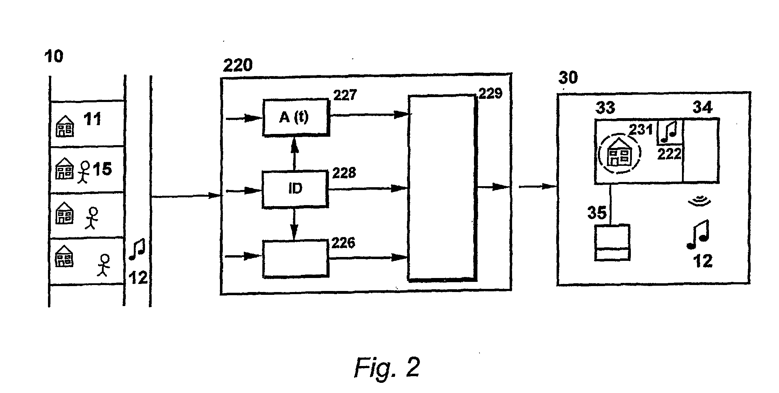

In Figur 2 ist eine bevorzugte Ausführungsform der Erfindung dargestellt. Die Videosequenz 10 wird in einer Erstellungseinrichtung 220 mit aktivierbaren Objekten versehen, um in der Wiedergabeplattform 30 dargestellt werden zu können. In der Videosequenz 10 ist die Bildsequenz 13 und die Tonspur 14 enthalten. Die Erstellungseinrichtung 220 kann insbesondere Teil eines Computers, einer Video-Bearbeitungsschnittstelle oder Filmbearbeitungseinrichtung sein, die vorhandene Einrichtung bestimmt wesentlich die Ausführung des Verfahrens. Ein Computer kann insbesondere folgendes umfassen: eine Anzeigeeinheit, eine Tastatur, eine Maus als Zeigereinheit, eine Steuereinheit, eine Festplatte und ein Laufwerk für optische oder magnetische Speichermedien. Im folgenden wird insbesondere von einem Computer als Erstellungseinrichtung 220 ausgegangen.

Die Videosequenz 10 enthält beispielsweise einen Werbefilm für ein Geschäft 11, das Musiktitel verkauft, und kann als Filmrolle, Videoband oder in digitalisierter und eventuell zusätzlich komprimierter Form vorliegen. Zunächst wird Elementen einer Videosequenz, die potentiell aktivierbar sein sollen, in einer Zuordnungseinheit 228 ein Identifikationsmerkmal zugeordnet. Als Identifikationsmerkmal reicht eine einfache Nummerierung aus, sinnvoller Weise wird aber eine eindeutige textuelle Bezeichnung als Identifikationsmerkmal gewählt. Als Identifikationsmerkmale bieten sich beispielsweise für den Werbefilm an: "Musikgeschäft" für Element 11, "Musiktitel" für Element 12 und "Kunde" für Element 15. Diese Identifikationsmerkmale werden beispielsweise in einer externen Datenbank abgelegt. Um die Elemente durch einen Bearbeiter (nicht dargestellt) der Videosequenz mit Zeitmarken versehen zu können, müssen Aktionen für die Elemente festgelegt werden, welche die Zeitmarken setzen. Beispielsweise ein Drücken der Tasten: "G" für MusikGeschäft, "T" für MusikTitel oder "K" für Kunde.

Gemäß der Erfindung werden in einer Zeitmarkeneinheit 227 bei einer Wiedergabe der Videosequenz 10 eine Startzeitmarke für die Aktivierbarkeit des Elements 11 gesetzt, wenn der Bearbeiter die entsprechende Taste "G" drückt, und eine Endzeitmarke gesetzt, wenn der Bearbeiter die Taste "G" loslässt. Der Bearbeiter erkennt das Element 11 in der Videosequenz und führt die diesem Element zugeordnete Aktion aus, damit eine Zeitmarke gesetzt wird. Als Zeitmarken können ein Startzeitpunkt und ein Endzeitpunkt für die Aktivierbarkeit des zugeordneten Elements verwendet werden, es ist aber auch möglich einen Startzeitpunkt und ein Aktivierbarkeitszeitraum festzulegen, oder die Bildnummem innerhalb der Videosequenz als Zeitmarken zu verwenden. Als Aktion des Bearbeiters sind beispielsweise auch das Berühren eines berührungsempfindlichen Bildschirms an einer dem Element zugeordneten Stelle oder auch eine Spracherkennung für das Identifikationsmerkmal ("Musiktitel") des Elements denkbar. Weiterhin kann das Setzen der Zeitmarken auf erfassbare Gesten des Bearbeiters erfolgen.

Dem Bearbeiter wird ein potentiell aktivierbares Element 11,12 und 15 bei dessen Auftreten durch eine Schaltfläche signalisiert. Der Bearbeiter erkennt das Auftreten des aktivierbaren Elements 11 schneller und kann über die Schaltfläche zugleich den Aktivierbarkeitszustand des Elements erfahren, die Schaltfläche wird als gedrückte Schaltfläche dargestellt, für einen Zeitraum in dem der Bearbeiter das Element 11 bereits in einer vorherigen Wiedergabe der Videosequenz aktivierbar gemacht hat.

Die Zeitmarken werden dem Identifikationsmerkmal zugeordnet, und beispielsweise in einer externen Datenbank abgespeichert Sie sind daher unabhängig von jeglicher räumlicher Information über das Element, dessen Aktivierbarkeitskriterium sie sind, wodurch ein Erfassen der Koordinaten des Elements, der räumlichen Ausdehnung oder seiner Bewegung nicht erforderlich sind. Weiterhin kann der Bearbeiter beispielsweise das Element 12 bereits vor dessen Hörbarkeit in der Videosequenz aktivierbar machen, um es besonders hervor zu heben. Er kann aber auch ein nicht in der Videosequenz auftauchendes Standardprodukt des Musikgeschäftes 11, welches ihm als aktivierbares Objekt bei Werbefilmen für das Musikgeschäft immer zusätzlich angeboten wird, in die Videosequenz einfügen. Die Aktivierbarkeit des Elements kann somit vollständig unabhängig von der Darstellung des Elements in der Videosequenz sein.

Bei der Bearbeitung erfolgt die Wiedergabe der Videosequenz 10 als Bewegtbild, insbesondere in Echtzeit, um dem Bearbeiter die analoge Situation wie dem späteren Betrachter zu geben. Der Bearbeiter kann die Wiedergabegeschwindigkeit schneller oder langsamer als Echtzeit einstellen und somit die eine an die Videosequenz angepasste Bearbeitungsgeschwindigkeit. Wird beispielsweise in einem ersten Teil des Werbefilms nur das Musikgeschäft 11 als aktivierbares Element vorgesehen, so kann dieser Teil der Videosequenz schneller bearbeitet werden, als ein komplexerer Abschnitt, in dem beispielsweise verschiedene Musiktitel kurz hintereinander angespielt werden, die alle aktivierbar gemacht werden sollen. Der Bearbeiter kann beispielsweise bei verringerter Wiedergabegeschwindigkeit für jeden neuen Musiktitel eine Taste drücken und gedrückt halten, bis er alle Tasten gleichzeitig wieder loslässt. Angelegt werden entsprechend Zeitmarken, die mit jedem neuen Titel beginnen, über die Dauer des Musiktitels hinaus gehen, und deren Aktivierbarkeitszeiträume parallel existieren.

Dies kann insbesondere durch Ablegen der Zeitmarken in der externen Datenbank erfolgen, oder durch Anlegen einer separaten Spur für die Videosequenz für jeden Aktivierbarkeitszeitraum.

In einer Einheit 226 zur Bestimmung der Aktivierungseigenschaften werden Aktivierungseigenschaften beispielsweise für die Elemente 11 und 12 angelegt. Neben den Betrachteraktionen mit zugeordneten Ereignissen, kann beispielsweise eine visuelle Repräsentation, aber auch räumliche Informationen in den Aktivierungseigenschaften für das Element enthalten sein.

In der Videosequenz wird vorzugsweise ein Verweis auf die in der externen Datenbank getrennt verwalteten Zeitmarken oder Aktivierungseigenschaften des Elements abgelegt. Durch die getrennte Verwaltung der Zeitmarken und Aktivierungseigenschaften lassen sich diese Informationen leicht ändern und übersichtlich darstellen. Dem Bearbeiter kann beispielsweise eine Liste der Zeitmarken oder der Aktivierungseigenschaften angezeigt und zum Editieren bereit gestellt werden.

Vorzugsweise wird eine Mindestlänge für Aktivierbarkeitszeiträume überwacht, um aktivierbare Objekte in der Videosequenz zu vermeiden, die für einen Betrachter nicht aktivierbar sind. Diese Mindestlänge kann automatisch erzwungen und durch Verlegen der Endzeitmarken erreicht werden, oder zu einem Wamhinweis an den Bearbeiter führen. Werden für ein Element mehrere Aktivierbarkeitszeiträume angelegt, so wird der minimale zeitliche Abstand zwischen den Aktivierbarkeitszeiträumen überwacht und durch Zusammenführen von Aktivierbarkeitszeiträumen gewährleistet. Das Zusammenführen der Aktivierbarkeitszeiträume kann wiederum automatisch oder verbunden mit einem Wamhinweis an den Bearbeiter erfolgen.

In einer Einbindungseinheit 229 wird ein aktivierbares Objekt 231 oder (12+222) für eine Wiedergabeplattform 30 mit einem speziellen Format, mittels der Zeitmarken und formatspezifischen Aktivierungseigenschaften erstellt. Die Wiedergabeplattform 30 kann sich durch vielfältige Software- oder Hardware-Eigenschaften voneinander unterscheiden. Digitale Videos können beispielsweise auf einem Computer mit der Software "Quicktime®" oder "Windows Media Player®" abgespielt werden. Die in Figur 2 dargestellte Wiedergabeplattform 30 umfasst eine Bildschirmeinheit 33 beispielsweise zur Darstellung eines aktivierbaren Objekts 231 und einer aktivierbaren Fläche 222, eine Tonwiedergabeeinheit 34 beispielsweise zur Wiedergabe der Tonfolge 12 und zumindest eine Schnittstelle zu dem Betrachter, beispielsweise eine Zeigereinheit 35. Als Wiedergabeplattform 30 können beispielsweise ein Computer, ein Mobiltelefon, eine Einrichtung für Videospiele, ein Fernseher mit entsprechenden Zusatzfunktionen oder ein Fernseher in Kombination mit einer Wiedergabeeinrichtung, wie einem Videorekorder, dienen.

Eine rechnergesteuerte Vorrichtung, die Mittel enthält, die beschriebenen Verfahren zu realisieren, kann abhängig vom Eingangsformat der Videosequenz unterschiedlich ausgestaltet sein.

Das Computerprogramm, welches das beschriebene Verfahren implementiert, kann auf einer Festplatte des PC, oder einem anderen magnetischen oder optischen Datenträger abgelegt sein.

## Patentansprüche

1. Verfahren zum rechnergestützten Erstellen von Daten zur Erzeugung eines aktivierbaren Objekts (31, (12+22)) für ein auditives oder visuelles Element (11, 12, 15) einer Videosequenz (10), umfassend die Schritte:
Erzeugen eines Identifikationsmerkmals für das aktivierbare Objekt (31, (12+22)), um eine Zuordnung zu dem Element (11, 12, 15) der Videosequenz (10) zu ermöglichen;
Wiedergeben der Videosequenz (10) für einen Bearbeiter der Videosequenz (10); und
Setzen eines Aktivierbarkeitszeitraums für das aktivierbare Objekt (31, (12+22));
**dadurch gekennzeichnet, dass**
der Schritt des Setzens eines Aktivierbarkeitszeitraums durch Setzen von Zeitmarken für das Element (11,12,15) erfolgt und die Zeitmarken sowie die Identifikationsmerkmale in einer Datenbank gespeichert werden, wobei die Zeitmarken dem Element (11,12,15) über das Identifikationsmerkmal zugeordnet sind; und
der Schritt des Wiedergebens so erfolgt, dass der Schritt des Setzens der Zeitmarken durch eine Aktion des Bearbeiters während der Wiedergabe der Videosequenz (10) ermöglicht wird.

2. Verfahren nach Anspruch 1 **dadurch gekennzeichnet, dass**
das Setzen der Zeitmarken in Antwort auf einen Tastendruck des Bearbeiters erfolgt.

3. Verfahren nach Anspruch 1 oder 2 **dadurch gekennzeichnet, dass**
die Zeitmarken unabhängig von räumlicher Information über das Element (11, 12, 15) gespeichert werden.

4. Verfahren nach einem der Ansprüche 1 bis 3 **dadurch gekennzeichnet, dass** die Wiedergabe der Videosequenz (10) als Bewegtbild erfolgt.

5. Verfahren nach einem der Ansprüche 1 bis 4 **dadurch gekennzeichnet, dass**
die Zeitmarken und Aktivierungseigenschaften für das Element (11,12,15) getrennt von der Videosequenz (10) und getrennt voneinander gespeichert werden.

6. Verfahren nach einem der Ansprüche 1 bis 5 **dadurch gekennzeichnet, dass**
dem Bearbeiter ein potentiell aktivierbare Element (11, 12, 15) bei dessen Auftreten durch einen Text oder eine Schaltfläche signalisiert wird.

7. Verfahren nach Anspruch 5 oder 6 **dadurch gekennzeichnet, dass**
in der Videosequenz (10) ein Verweis auf die getrennt verwalteten Zeitmarken oder Aktivierungseigenschaften des Elements (11, 12, 15) abgelegt wird.

8. Verfahren nach einem der Ansprüche 1 bis 7 **dadurch gekennzeichnet, dass**
eine Mindestlänge für Aktivierbarkeitszeiträume überwacht wird.

9. Verfahren nach einem der Ansprüche 1 bis 8 **dadurch gekennzeichnet, dass**
ein minimaler zeitlicher Abstand für Aktivierbarkeitszeiträume überwacht und durch Zusammenführen von Aktivierbarkeitszeiträumen erreicht wird.

10. Verfahren nach einem der Ansprüche 1 bis 8 **gekennzeichnet durch:**
Erstellen eines aktivierbaren Objekts (231, (12+222)) für eine Wiedergabeplattform (30) mit einem speziellen Format, mittels der Zeitmarken und formatspezifischen Aktivierungseigenschaften.

11. Rechnergesteuerte Vorrichtung enthaltend Mittel, die ein Verfahren nach einem der Ansprüche 1 bis 10 realisieren.

12. Speichermedium enthaltend ein Computerprogramm oder eine Befehlssequenz, die ein Verfahren nach einem der Ansprüche 1 bis 10 realisieren.

## Claims

1. A method for computer controlled creation of data for generation of an activatable object (31,(12+22)) for an audio or visual element (11, 12, 15) of a video sequence (10), the method comprising the steps of:
creating an identifier for the activatable object (31,(12+22)), to enable association to the element (11, 12, 15) of the video sequence (10);
reproducing the video sequence (10) for a person processing the video sequence (10); and
setting a period of activatibility for the activatable object (31,(12+22));
**characterised in that**
the step of setting a period of activatibility results from setting timestamps for the element (11, 12, 15), and the timestamps as well as the identifier are stored in a database, wherein the timestamps are associated to the element (11, 12, 15) via the identifier; and
the step of reproducing happens in such a way that the step of setting the timestamp by an action of the processing person during the reproduction of the video sequence (10) is made possible.

2. The method according to claim 1, **characterised in that** the setting of timestamps is performed in response to a keyboard input of the processing person.

3. The method according to claim 1 or 2, **characterised in that** the timestamps are administered independent from positional information of the element (11, 12, 15).

4. The method according to one of claims 1 to 3, **characterised in that** the reproduction of the video sequence in (10) is performed in a moving image manner.

5. The method according to one of claims 1 to 4, **characterised in that** the timestamps and the activation properties of the elements (11, 12, 15) are stored separated from the video sequence (10) and separated from each other.

6. The method according to one of claims 1 to 5, **characterised in that** the appearance of a potentially activatable element is indicated for the processing person by means of a text or a press button.

7. The method according to claim 5 or 6, **characterised in that** a link to the separately administered time stamps or activation properties of the elements is stored in the video sequence (10).

8. The method according to one of claims 1 to 7, **characterised in that** a minimum length for activatibility periods is monitored.

9. The method according to one of claims 1 to 8, **characterised in that** a minimum time distance for activatibility periods is monitored and realised by joining activatibility periods.

10. The method according to one of claims 1 to 9 **characterised by** creating an activatable object (231, 12 + 222) for a reproduction platform (30) having a specific format by means of the timestamps and formats specific activation properties.

11. Computer controlled apparatus comprising means for realising a method according to one of claims 1 to 9.

12. Storage medium comprising a computer program or instruction sequence realising a method according to one of claims 1 to 10.

## Revendications

1. Procédé pour l'élaboration informatisée de données destinées à générer un objet (31, (12 + 22)) activable pour un élément (11, 12, 15) auditif ou visuel d'une séquence vidéo (10), comprenant les étapes suivantes :
- création d'un attribut d'identification pour l'objet (31, (12 + 22)) activable, afin de permettre une association (11, 12, 15) de la séquence vidéo (10) avec l'élément ;
- reproduction de la séquence vidéo (10) pour la personne chargée du traitement de la séquence vidéo (10) ; et
- définition d'une période de possibilité d'activation pour l'objet (31, (12 + 22)) activable ;
**caractérisé en ce que** l'étape de définition d'une période de possibilité d'activation consiste à définir des repères de temps pour l'élément (11, 12, 15) et **en ce que** les repères de temps, ainsi que les attributs d'identification sont mémorisés dans une base de données, les repères de temps étant associés à l'élément (11, 12, 15) par l'intermédiaire de l'attribut d'identification ; et l'étape de la reproduction consiste à rendre possible que l'étape de définition des repères de temps soit lancée par une action de la personne chargée du traitement pendant la reproduction de la séquence vidéo (10).

2. Procédé selon la revendication 1, **caractérisé en ce que** la définition des repères de temps est effectuée en réponse à une action sur une touche par la personne chargée du traitement.

3. Procédé selon la revendication 1 ou 2, **caractérisé en ce que** les repères de temps sont mémorisés indépendamment de l'information spatiale sur l'élément (11, 12, 15).

4. Procédé selon une des revendications 1 à 3, **caractérisé en ce que** la reproduction de la séquence vidéo (10) est effectuée sous forme d'image animée.

5. Procédé selon une des revendications 1 à 4, **caractérisé en ce que** les repères de temps et les propriétés d'activation pour l'élément (11, 12, 15) sont mémorisés séparément de la séquence vidéo (10) et séparément les uns des autres.

6. Procédé selon une des revendications 1 à 5, **caractérisé en ce qu'**à chaque apparition d'un élément (11, 12, 15) potentiellement activable, celui-ci est signalé à la personne chargée du traitement, au moyen d'un texte ou d'un bouton à activer.

7. Procédé selon la revendication 5 ou 6, **caractérisé en ce qu'**un renvoi relatif aux repères de temps ou aux propriétés d'activation de l'élément (11, 12, 15), gérés séparément, est stocké dans la séquence vidéo (10).

8. Procédé selon une des revendications 1 à 7, **caractérisé en ce qu'**une longueur minimale des périodes de possibilité d'activation est surveillée.

9. Procédé selon une des revendications 1 à 8, **caractérisé en ce qu'**un écart de temps minimum pour les périodes de possibilité d'activation est surveillé et est atteint par la jonction des périodes de possibilité d'activation.

10. Procédé selon une des revendications 1 à 8, **caractérisé par** l'élaboration d'un objet (231, (12 + 222)) activable pour une plate-forme de reproduction (30) avec un format spécial, au moyen des repères de temps et des propriétés d'activation spécifiques au format.

11. Dispositif informatisé comprenant des moyens, qui sont destinés à la mise en oeuvre d'un procédé selon une des revendications 1 à 10.

12. Support de mémoire comprenant un programme informatique ou une séquence d'instructions pour la mise en oeuvre d'un procédé selon une des revendications 1 à 10.
